# EUROPEAN PATENT SPECIFICATION

(11) **EP 2 989 876 B1**
(45) Date of publication and mention of the grant of the patent: **05.12.2018**
(21) Application number: 14787493.7
(22) Date of filing: 21.04.2014
(51) Int. Cl.: A01C 5/06, A01C 7/00, A01C 14/00, A01C 21/00

(54) **MECHANIZED METHOD FOR SOWING SEEDS (VARIANTS)**
MECHANISIERTES VERFAHREN ZUM SÄEN VON SAATGUT (VARIANTEN)
PROCÉDÉ DE SEMIS MÉCANISÉ (ET VARIANTES)

(30) Priority: 23.04.2013 RU 2013118876
(43) Date of publication of application: 02.03.2016
(73) Proprietor: Brindyuk, Sergei Vladimirovich, Alekseevka 309850, Belgorod region (RU)
(72) Inventor: Brindyuk, Sergei Vladimirovich, Alekseevka 309850, Belgorod region (RU)
(74) Representative: Hoffmann Eitle
(86) International application number: PCT/RU2014/000286
(87) International publication number: WO 2014/175781

(56) References cited:
- EP-A1- 2 929 769
- WO-A1-99/39562
- WO-A2-2012/121576
- RU-C- 1 787 332
- RU-C1- 2 297 748
- RU-C1- 2 305 926
- SU-A1- 913 962
- US-A1- 2004 089 209
- US-A1- 2007 245 939

## Description

### FIELD OF THE INVENTION

The invention relates to a method of mechanized sowing of seeds according to claim 1.

### BACKGROUND

One of the problems of obtaining a high yield of agricultural crops is the problem of their timely seeding, preservation of moisture in the soil and weed control.

High yield obtaining depends on the level of moisture in the soil. For example, the probable level of summer wheat yield depends on the spring soil soaking depth (see the data of experimental Swift Current (Canada) Station in table 1):

**TABLE 1: Probable Yield Level**

| Spring soil soaking depth, in cm | Probability of crop yield, in c/ha | |
|---|---|---|
| | More than | More than |
| | 10 | 17 |
| 0 - 50 | 2 : 10 | 0 |
| 50 - 68 | 3:10 | 1:10 |
| 68 - 82 | 6:10 | 2:10 |
| 82 - 112 | 7:10 | 3:10 |
| More than 112 | 9:10 | 6:10 |

As it can be seen, a lack of moisture in the period of plant vegetation substantially lowers the yield. For taking advantage of and preserving moisture it is important to optimize the working methods, which is impossible by means of conventional technologies, because they assume reaching the physical soil maturity and, after this, the execution of the workings (soil condition in the sense of physical maturity, which demonstrates its readiness to treatment, or of biological maturity, which demonstrates its readiness to seeding and plant crop landing).

The physical maturity of soil is created by optimum moistening (humidity of a "mellow" condition), so that during mechanical treatment the soil would disintegrate into clots with a size in the range of 1 to 10 mm.

At a higher moisture, the soil adheres to tillage equipment and at a lower moisture it breaks apart into large chunks and clots.

Soil in a mature state crumbles better, offers the least resistance during the treatment, and in the plowed soil an optimum correlation of the solid content, water, and air is achieved. The maturity of the soil is determined visually, by nature of crumbling, throwing the soil off the shovel, or hurling a lump of a handful of the soil. The biological maturity is achieved in a well-treated, optimally moistened and warmed soil (see Great Soviet Encyclopedia - M.: Soviet Encyclopedia. 1969 - 1978).

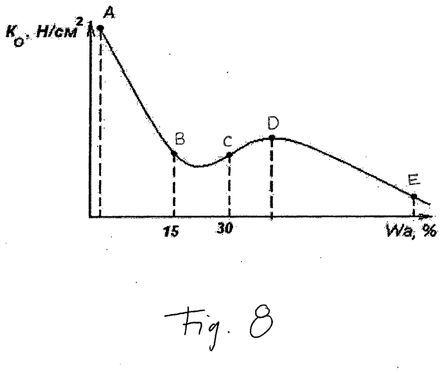

Nowadays, existing technologies provide an estimation of the period when the soil gets into physical maturity and will thus offer the least resistance to mechanical treatment. The dependence of the resistance to soil treatment against the moisture can be tracked on a graph (see figure 8), where "K" is the resistance of soil to treatment and "Wa" is the absolute soil moisture.

During the plowing of parched soil (segment AB) chunks with a diameter up to 0,5 m and more are formed. While plowing the water soaked soils (segment CD), strong strucking and forming of clots and outgrowths of soil in front of tillage machine takes place. This leads to the increase of soil resistivity and a bad plant residue sealing. With a further increase of the moisture (segment DE), water acts as a lubricant and "K" decreases. However, existing types of tillage and sowing machinery are not capable to function at higher moisture. For conventional types of equipment point C is considered to be the upper limit of the physical maturity of soil. Among the different types of soils this varies and remains within a range of 15 to 35% of the absolute humidity.

**TABLE 2: Example of Typical Loamy Black Soil:**

| Type of soil, mechanical structure | Supreme field water capacity (SFC, LC), % | Humidity of capillary rupture (HRC), % | Humidity of sustainable wilt (HW), % | Physical maturity, % |
|---|---|---|---|---|
| Typical loamy black soil | 30-34 | 17-20 | 12-15 | 15-20 |

| | | | | |
|---|---|---|---|---|
| (cf. "Characteristics of soil water properties", by I S Cauritchev, 1989; V P Covrigo, 2000) | | | | |

It is well seen that the beginning of physical maturity of soil coincides with the beginning of capillary disruption (17 - 20%), which leads to the beginning of a lack of moisture for the plant.

The lack of existing technologies manifests itself in the ineffective loss of time while the physical soil maturation is expected, during which a big loss of moisture takes place as a result of evaporation.

At the limits of high humidity, scattering seeding can be used, but this has one serious drawback for most of the agricultural crops. In the case of a lack of rain or watering, the application of broadcast seeding can lead to crop damage, because the tillering node (e.g. springs) is on the surface of the area of lack of moisture. It is thus necessary to immerse the seeds into the soil with a depth of not less than 0.5 cm.

A known method of crop production includes spudding, forming of a comb-like soil profile, seeding by the way of stacking and indentation with a further mulching (cf. RU 2378815 (IPC A01C7/00) of 17.04.2008).

A known method of crop production includes the operation of autumn and spring soil loosening, seed sowing to the treated soil and seed furrow sealing (cf. "Technology and technical means for the lane sowing of grass seeds to the sod", Recommendations of the Agriculture Research Institute of north-east, named after N V Rudnitsky, Kirov, 2000, page 58 page, and prototype).

Further, from US 2007/0245939 A1 there is known a method and seed boot for seeding in wet soil, from WO 2012/121576 A2 there is known a multifunctional complex direct seeder that has interlockingly adjustable left and right horizontally and front and rear heights, and from US 2004/0089209 A1 there is known a levelling wheel and closing wheel used in no-till sowing.

In general, the drawbacks of the known methods are low efficiency of crop farming, drastic moisture losses during spring loosening, and the difficulty to comply with optimum agricultural seed sowing conditions, because of the need to carry out the seedbed spring plowing operation which is almost impossible in the case of physically immature soils.

### SUMMARY

The object of the present invention is thus increasing the efficiency of crop farm workings, namely:
- reduction of the losses of spring moisture reserves in the soil,
- optimization of sowing dates,
- obtaining of energetically strong shoots,
- offset of the seeding term range to earlier periods,
- reduction of the dependence of sowing works on soil condition,
- improvement of the environmental performance of agricultural production, and consequently of produced crops,
- reduction of the negative impact of the seeding system to the soil, and influence of the latter to the seeding system elements,
- increase of the sowing rate,
- increase of the period of crops' vegetative growth,
- reduction of the specific fuel expense,
- reduction of the weight and overall characteristics of seeding system.

The object is met by the subject-matter of the sole claim.

Besides that, sowing with a driven equipment can be employed, for example a "BARS UTEV 271" or a hovercraft.

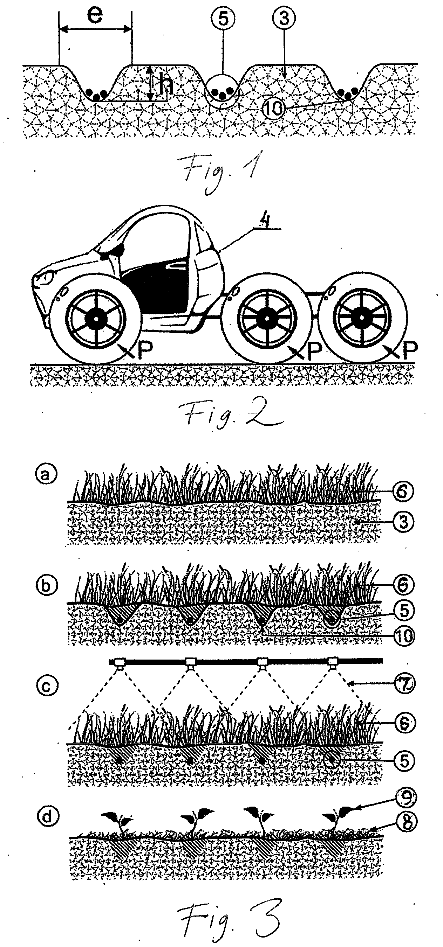

In summary, the attributes show new properties, that come about through their using:
- reduction of spring moisture reserve losses in the soil (because the working is carried out in a period when the absolute soil humidity is more than 2 % higher than the upper humidity limit of the physical soil maturity and the biggest part of it remains in the soil).
- optimization of sowing terms (because the latter is carried out in a period when the absolute soil humidity is more than 2% higher than the upper humidity limit of the physical soil maturity, namely, in a period when for some cultures, for example for barley, the term is optimal by its technical indicators).
- receiving of energetically powerful shoots (as a result of the optimal sowing terms and the crops shoot by means of the increased soil humidity).
- transfer of the sowing terms range to earlier periods (because the workings are carried out in a period when the absolute soil humidity is more than 2% higher than the upper humidity limit of the physical soil maturity),
- reduction of the dependence of the sowing on the soil condition (as a result of the proposed seeding and tillage systems that provide the opportunity to carry out the sowing, including the last ones in a season, when the absolute soil humidity is more than 2% higher than the upper humidity limit of the physical soil maturity),
- rendering the sowing of agricultural crops and, as a consequence, the agricultural production more environmental-friendly, (which is the result of employing a condition of an increased fertility of sowing agricultural crops and, with this an overall reduction of herbicides and chemical fertilizers).
- reduction of the negative influence of the agricultural equipment to the soil and of the elements of the former (as a result of the reduction of the sowing equipment's total weight so that the soil is less compressed and, in turn, the more watery ground renders the influence of the latter to the equipment elements),
- increasing of sowing terms (that are promoted by the less pronounced resistance of the soil to the working equipment elements),
- increasing the vegetative sowing development terms (that are promoted by the earlier conducted agricultural terms),
- reduction of the specific fuel expense (as a result of the increased velocities of conducting the agricultural terms and a less pronounced resistance of the soil to the working elements of the working equipment),
- reduction of the mass and the overall characteristics of the sowing system (this possibility appears as a consequence of the reduced ladings to the elements of the system).
- Besides that, the moisture preservation in the soil normally withered after the chemical treatment of the weeds promotes the closing of the soil surface.
- At an increased soil humidity the reference and coupling rates of the propeller element diminish and, therefore, the immersion to a depth of more than 15 cm or the forming of furrows for seed packing with a depth of more than 12 cm (cf. figure 1, where "e" is the furrow width for seeds packing, and "h" is the depth of the seed immersion) requires much energy expenses and is thus economically unfeasible.

Nowadays, as the driven equipment for seeding machines functioning as tractor-ploughs are used for the biggest part.

On the ground of the norm relating to the propeller influence onto the soil (cf. All-Union State Standard 26955-86) the maximum pressure of the propellers onto loamy and clayey soil and ones of normal mechanical strain in the soil must correspond to the requirements indicated in table 3. The norm data clearly indicate that under the condition of the physical soil maturity the upper pressure limit in the spring season pressure must not exceed 80 kPa, where the least field "water capacity LC" corresponds to the capillary-suspended saturation of the soil with water, when the latter is at maximum available for the plants.

**TABLE 3: Norms of Maximum Pressure of Propellers**

| Soil moisture in the layer of 0-30 cm | Maximum pressure exerted onto the soil by wheeled and crawler propellers, in kPa, no more than | |
|---|---|---|
| | Spring season | Summer-autumn season |
| More than 0,9 LC | 80 | 100 |
| 0,7 LC to 0,9 LC inclusively | 100 | 120 |
| 0,6 LC 0,7 LC | 120 | 140 |
| 0,5 LC 0,6 LC | 150 | 180 |
| 0,5 LC and less | 180 | 210 |

In the case of exceeding these limits the formation of ruts and soil puddling occurs, which substantially affects the fertility.

For the movement on the soil ground with an absolute humidity of more than 2 % and up to 100 % higher than the upper humidity limit of the physical soil maturity ground vehicles are utilized which exert pressures less than 60 kPa, namely a "BARS UTEV 271" on elastic tires, vehicles on envelopes of ultra-low pressure (5 - 60 kPa) tires (cf. figure 2) or hovercraft vehicles. The sequence of the sowing by point 3 is indicated in figure 3, where "a" is an untreated field, "b" is sitting on weeds, "c" is chemical treatment with herbicides, and "d" indicates seedlings for withered weeds.

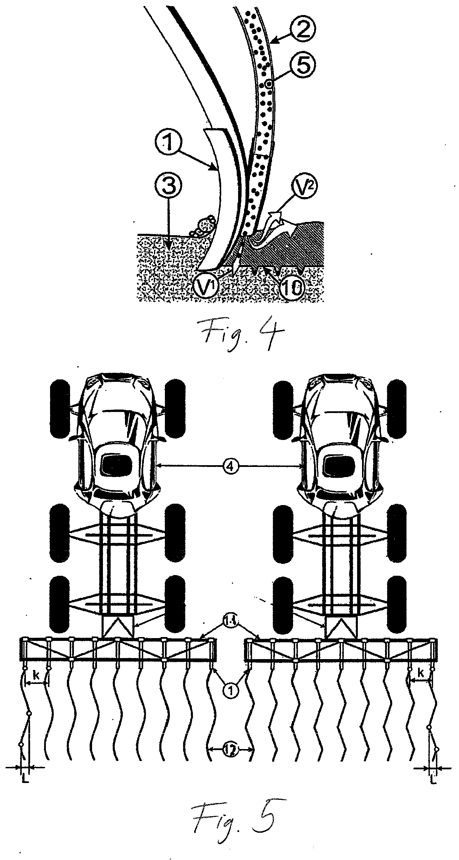

Nowadays sowing equipment is widely used with pneumatic seeding, that is to say, with a pneumatic transportation of seeds from the hopper to the plough iron. This means of transportation of seeds allowed to make a finer weight distribution in the system by means of a displacement of the hopper remotely from the plough irons, and also allowed to displace any additional equipment in the form of cultivators, paws, and disks, which perform auxiliary operations by soil tillage in frames of the equipment. At a pneumatic seeder the delivery of the seeds to the plough iron is performed by means of air and at the exit from the seed passage seed velocities are lower or equal to velocity of the air, which yields a further movement of the seeds in the direction of the air flow. At the exit of the air from the seed passage the air changes the vector of motion backwards to the soil. As a result, a part of the seeds is inflated from the seed furrow, which yields low-quality seeding. In the proposed method (variant 2), in which seed velocities at the exit are formed higher than the air velocity so that V₁ >V₂ (which is obtained with the help of the construction of the seed passage, which have different profiles along its cross-section) and the influence of the air flow to the vector of seeds motion decreases. The seeds with the vector directed to the soil reach the soil and are not blown out, which is necessary for effective seeding. (cf. figure 4, where: 1 - plough iron, 2 - seed passage, 3 - soil, 5 - seeds, 10 - seedbed, V₁ - velocity of seeds, V₂ - velocity of air flow)

An increase of the seed velocity of more than 35 m/sec is inappropriate for traditional sowing, because at an absolute humidity of less than 2% higher than the upper humidity limit of the physical soil maturity at temperatures above zero the soil has a higher hardness than at an absolute soil humidity of more than 2% higher than the upper humidity limit of the physical soil maturity at temperatures above zero, which leads to a damage of the seeds struck by the ground and in turn to a reduction of germination. At sowing into soil which has an absolute soil humidity of more than 2% higher than the upper humidity limit of physical soil maturity at temperatures above zero an increase of the seed velocities (variant 3) will allow the seeds to make a closer contact with the soil. Accelerated seeds get caught by the soil, which promotes a better germination, and in the case of the seed velocities being regulated automatically depending on the soil hardness and/or sowing conditions (variant 4) the sowing velocity increases and together with it the effectiveness of the sowing working increases.

A utilization of seeds of cold-resistant plants, and steady to cold agricultural crops in the spring season during very early sowing into the soil with a high humidity (variant 5) will also raise the sowing efficiency in the case of a change in the weather toward cooler temperatures falling below zero will allow the plants not to die in this period and to create uniform seedlings.

Seeding is divided into common, dense common, closed row, wide row and stripe like; square-cluster. The main task of seeding is the distribution on the field uniformly by area and by depth, which leads to a more uniform distribution of nutrients between the plants. Generally, the above discussed variants of seeding consider the increase of the furrow depth for the seeds by repeated sowing. The increase of the furrow depth for laying the seeds laying repeated sowing results in a substantial increase of the energy costs. The proposed solution (variant 6) allows to dispense the seeds on the field more evenly and optimally by means of seeding in zigzag and wave-form trajectories, because the total length of the furrow on the field rises up to 50%, without additional measures and energy costs, which in turn increases the seeding efficiency.

The present method proposes a set of attributes and shows new properties consisting in the fact that it is employed a reduction of the spring moisture losses, which renders it possible to optimize the sowing terms that in all yields an increase of the seeding efficiency.

Besides that also weeds which withered after chemical treatment close the soil surface and are an instrument in preserving the soil moisture.

Correspondence to criterion "Industrial applicability" is proved by the example of particular application of offered invention, which is shown below.

### DESCRIPTION OF THE DRAWINGS

Figures 1 - 5 show schematically the proposed technical solutions.
Fig.1: Planting arrangement (where "e" is furrow width, and "h" its depth)
Fig.2: Drive equipment "BARS UTEV 271" (where "P" is the tire pressure),
Fig.3: The working sequence of variant 3, (where "a" is the untreated field, "b" sitting on weeds, "c" chemical treatment by herbicides, and "d" indicates the seeding of withered weeds.
Fig. 4: The method according to variant 4 (where V₁>V₂, "V₁" is the seed velocity, and "V₂ " is the air velocity) .
Fig. 5: Seeding by means of zigzag and wave trajectories (where: "L" is the amplitude of free oscillation of the plough iron and "k" is the corridor width).
Fig. 6: The general form of conditions for seeding which is performed by a proposed method.
Fig. 7: The general form of conditions for seeding which is performed by a conventional method.
Fig. 8: Graph of the dependence of the soil resistance to its processing against humidity.

A trial of the proposed methods for increasing the efficiency of agricultural seeding has been conducted on the example of sunflowers in the farm "YuNI Ltd." in the Olkhovatsky district (Voronezh region). With the aim of an increase of a reliable expertise a field with a total area of 123 hectares was divided into two parts. On the first part of the field cultivation of sunflower has been conducted in a conventional way, and on the second by the presently developed method.

The proposed method, just as a conventional method provides autumn soil preparation, which includes the loosening and ravaging of weeds. However, in spring time and before the seeding no further soil treatment has been conducted. The seeding has then been performed to the soil, directly to the sprouted weeds, without preliminary cultivation as the soil was prepared in autumn. The seeding on the part of field, which was treated by the proposed method was made 18 days earlier than on the one treated conventionally (because the soil temperature regime by that time has become optimal for the growth of cold-resistant seeds of sunflower), and the seeding has been carried out immediately after rain with a soil humidity of 50%.

Five days after seeding and with the help of general transport and technical means on ultra-low pressure tires (e.g. "BARS-271") chemical treatment with herbicides of a continuous action was performed. The wheeled propeller of the present vehicle renders a soil pressure of about 17 kPa, and, as a result, no formation of tracks has taken place, and, consequently, no sprouting seeds in the soil have been damaged in a depth of seeding of about 5 cm.

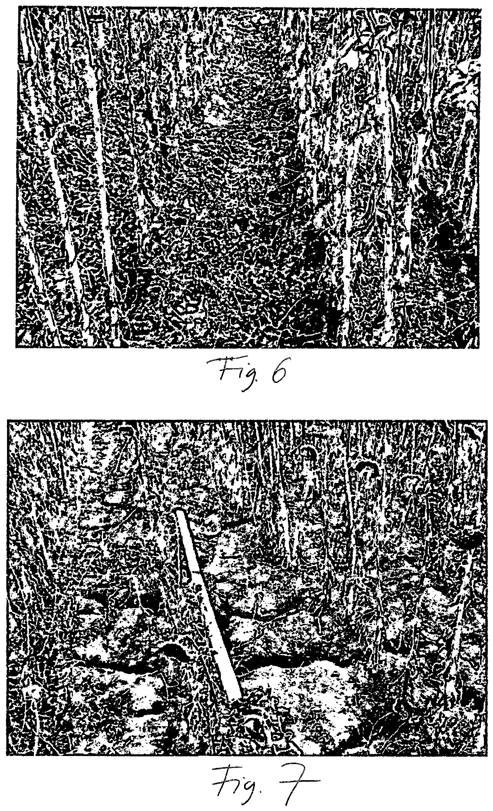

Carrying out of the chemical weeding before the appearance of seed shoots permitted to remove the weeds and not to depress the culture crop growth. The high efficiency of the chemical treatment has been achieved by a low-volume sprayer with a consumption of the working liquid of 20 to 60 liters per hour. The withered weeds have created an areal "umbrella" (pos. 8 on fig. 3; fig.6), which allowed to protect the aisle from direct sunshine, and consequently to reduce the evaporation of moisture and soil cracking, as well as to prevent the growth of weeds of the second wave.

The sunflowers planted on the second part of field have matured 10 days before as compared to the ones planted as usual. The maturation of sunflowers has happened earlier owing to the fact that the seeds have been put to the soil with optimum temperature, there was no direct contact between the cultivated plant and the herbicide, and the withered weeds have not allowed the soil to heat up strongly and correspondingly to crack, and that is why the moisture in soil has been preserved.

Traditionally, the chemical treatment is carried out after the growth of young sunflowers appears, with the help of a self-propelled sprayer, and the soil is not protected from sunlight. The characteristic feature is the fact that for the whole summer time there was no rain on this field. On this part of the field the soil was covered with deep fractures (fig. 7). The fertility on that part of the field, which was cultivated by the proposed method has come to 22,39 c/ha, whereas cultivation by the traditional method yielded 9,1 c/ha, and the difference in fertility is 13,29 c/ha (confirmed results).

An additional trial of the proposed method has been carried out by "Rusagro-Invest Ltd." on a field with an area of 108 h. The results of the harvest have showed that fertility of sunflowers, which were cultivated by the proposed method yield 24,1 c/ha, compared to the average fertility of sunflower in the farm of 16,2 c/ha. The difference in fertility is 7,9 c/ha (confirmed results).

In this way the application of the proposed method allows for obtaining the following technical effects, , namely:
- reduction of losses of spring soil moisture reserves,
- optimization of seeding terms,
- obtaining energetically strong shoots,
- displacement of the range of seeding terms toward earlier periods,
- reduction of the dependence of the seeding to the soil condition,
- rendering the agricultural production more ecologically-friendly, and, consequently, the produced crops,
- reduction of the negative influence of the seeding arrangement to the soil, and of the latter to seeding system elements,
- increase of the seeding speed,
- increase of the terms of vegetative crop growth,
- reduction of the mass and overall characteristics of the seeding system.
- allows to increase the fertility of agricultural crops;
- decreases the influence of weather to fertility;
- reduction of the specific fuel consumption, because:
   a) the fuel consumption of a "UTEV-271 BARS" is 0,2 1/h, and the cost of consumed combustible for a shift is 1,692 Rubles; the self-propelled sprayer is a "John Deere 4930" with a fuel consumption of 1,2 1/h, and the cost of consumed combustible for a shift is to 5200 Rubles;
   b) savings in the transportation of water for preparation: the transportation costs for water delivery for the shift with "UTEV-271 BARS" are 302 Rubles, and for the self-propelled sprayer "John Deere 4930" 1,646 Rubles.
   c) savings of herbicides during the employment of UTEV-271 "BARS" come to 20 - 30%.

### List of reference signs

1 plough iron
2 seed passage
3 soil
4 power tool
5 seeds
6 weeds
7 sprayer
8 withered weeds
9 culture plantlets
10 seedbed
11 sowing machine
12 furrow for seeding

## Claims

1. A method of mechanized sowing of seeds on risk farming areas including black earth, gray, brown forest and chestnut soils, the method including forming furrows for sowing the seeds with a width of more than 12 cm and a depth of seeding of 0,5 to 15 cm, **characterized in that** the mechanized sowing of agricultural crops to the soil is carried out in a period when an absolute humidity of the soil is more than 2% and up to 100% higher than an upper limit of humidity of a physical soil maturity at which the soil has an absolute humidity of 35%, at a temperature above zero, and by using a ground vehicle, which has the means to move along the ground with said absolute humidity with a velocity from 6 to 80 km/h and exerts a pressure of less than 60 kPa.

## Patentansprüche

1. Verfahren der mechanischen Aussaat von Saatgut auf Flächen der Risikolandwirtschaft, einschließlich Schwarzerde, grauem, braunen Wald und Kastanienboden, wobei das Verfahren ein Bilden von Furchen zur Aussaat des Saatguts mit einer Breite von mehr als 12 cm und einer Aussaattiefe von 0,5 bis 15 cm umfasst, **dadurch gekenntzeichnet**, dass die mechanische Aussaat von landwirtschaftlichem Saatgut auf den Boden in einem Zeitraum ausgeführt wird, wenn die absolute Feuchtigkeit des Bodens mehr als 2% und bis zu 100% höher ist als eine obere Feuchtigkeitsgrenze einer physikalischen Bodenreife, bei welcher der Boden eine absolute Feuchtigkeit von 35% hat, bei einer Temperatur über Null, und unter Verwendung eines Bodenfahrzeugs, welches die Mittel hat, sich auf dem Boden, mit besagter absoluter Feuchtigkeit, mit einer Geschwindigkeit von 6 bis 80 km/h zu bewegen und einen Druck von weniger als 60 kPa auszuüben.

## Revendications

1. Procédé de semis mécanisé de graines sur des zones agricoles à risque incluant des sols de terre noire, des sols gris, des sols bruns forestiers et des sols châtains, le procédé comportant la formation de sillons pour semer les graines d'une largeur de plus de 12 cm et d'une profondeur de semis de 0,5 à 15 cm, **caractérisé en ce que** le semis mécanisé de cultures agricoles dans le sol est réalisé pendant une période où une humidité absolue du sol est supérieure à 2 % et jusqu'à 100 % plus élevée qu'une limite supérieure d'humidité d'une maturité de sol physique à laquelle le sol présente une humidité absolue de 35 %, à une température au-dessus de zéro, et en utilisant un véhicule terrestre, qui a les moyens de se déplacer sur la terre avec ladite humidité absolue avec une vitesse de 6 à 80 km/h et exerce une pression inférieure à 60 kPa.
